# FASCICULE DE BREVET EUROPEEN

(11) **EP 4 415 525 B1**
(45) Date de publication et mention de la délivrance du brevet: **08.10.2025**
(21) Numéro de dépôt: 22797880.6
(22) Date de dépôt: 17.10.2022
(51) Int. Cl.: A01G 31/02, A01G 9/26, A01M 1/14

(54) **DISPOSITIF DE PRODUCTION DE DENRÉES VÉGÉTALES EN TERRE HORS SOL**
OBERIRDISCHE VORRICHTUNG FÜR DIE ERZEUGUNG VON PFLANZLICHEN PRODUKTEN IM BODEN
ABOVE-GROUND DEVICE FOR THE PRODUCTION OF VEGETABLE PRODUCTS IN SOIL

(30) Priorité: 15.10.2021 WO PCT/FR2021/000122
(43) Date de publication de la demande: 21.08.2024
(73) Titulaire: Independent Living Base S.A.S., 94100 Saint-Maur-des-Fossés (FR)
(72) Inventeur: BENVENISTE, Pascal, 94100 Saint-Maur-des-Fossés (FR); OUAFI, Mourad, 93320 Les Pavillons-sous-Bois (FR)
(74) Mandataire: Koudine, Andreï
(86) Numéro de dépôt international: PCT/IB2022/059963
(87) Numéro de publication internationale: WO 2023/062612

(56) Documents cités:
- EP-A1- 3 259 984
- EP-A1- 3 721 703
- WO-A1-2020/102905
- US-A1- 2014 115 958
- US-B2- 8 468 741

## Description

La présente invention concerne, de manière générale, le domaine des systèmes de production de denrées végétales en terre hors sol dans des espaces clos. Les plantes étant disposées dans les espaces clos à l'abri des intempéries, ces systèmes décrit, par exemple, dans US2014/115958A1, permettent de produire des denrées végétales en continue toute l'année.

L'invention selon la revendication 1 concerne un dispositif de production de denrées végétales en terre hors sol. Plus particulièrement, le préambule de la revendication 1 concerne un dispositif de production de denrées végétales en terre hors sol comportant :
- un bloc thermiquement isolé coopérant avec :
   ∘ un module d'alimentation du bloc en énergie électrique,
   ∘ un module d'approvisionnement du bloc en eaux pures,
   ∘ un module d'évacuation des eaux usées issues du bloc,
   ∘ un module d'éclairage coopérant avec le module d'alimentation en énergie électrique et adapté à éclairer l'intérieur du bloc,
   ∘ un module de climatisation coopérant avec le module d'alimentation en énergie électrique et adapté à produire et à maintenir une atmosphère contrôlée à l'intérieur du bloc,
- des pots disposés dans l'atmosphère contrôlée à l'intérieur du bloc, chacun de ces pots étant éclairé par le module d'éclairage et adapté à :
   ∘ recevoir un organe de plante,
   ∘ être irrigué par les eaux pures amenées par le module d'approvisionnement du bloc en eaux pures,
le bloc avec les pots, le module d'alimentation, le module d'approvisionnement, le module d'évacuation des eaux usées, le module d'éclairage et le module de climatisation sont adaptés à former un kit des éléments encastrables.

Ce dispositif de production de denrées végétales en terre hors sol est connu (voir, par exemple, une demande de brevet US2014/115958A1 publiée le 01/05/2014) et est couramment utilisé dans des fermes d'intérieur propres à une agriculture dite urbaine qui utilise des techniques du type hydroponie, aquaponie, aéroponie. Ces dernières permettent de cultiver certaines espèces des plantes dont les racines coopèrent en permanence avec de l'eau purifiée dans laquelle sont ajoutés des nutriments chimiques. Dans ces conditions, l'eau purifiée peut se trouver soit dans un état liquide, soit dans un état de vapeur (où les gouttelettes d'eau sont en suspension dans l'air). Ces techniques de l'hydroponie/aquaponie/aéroponie connues sont limitées en variabilité des espèces et concernent principalement des espèces à feuilles (salades, épinards), quelques plantes aromatiques (basilics, persils) et un petit nombre des fruits et légumes (fraises, concombres), à l'exclusion des plantes bulbes (pomme de terre, radis, ail, échalotte). Le dispositif connu selon US2014/115958A1 est solidaire avec un conteneur maritime transformé. Or, ce dernier ne peut pas être installé aisément et durablement (par exemple, pendant un cycle de production de denrées végétales) dans des villes où se trouve une majeure partie des consommateurs de ces denrées végétales. En effet, cela reste problématique du fait de ces dimensions (propres au conteneur maritime) et au vu des restrictions architecturales dans les villes (notamment dans leurs centres historiques) ce qui est insatisfaisant.

La présente invention, qui s'appuie sur cette observation originale, a principalement pour but de proposer un dispositif de production de denrées végétales en terre hors sol visant au moins à réduire une limitation précédemment évoquée. A cette fin, le dispositif, par ailleurs conforme à la définition générique ci-dessus, est tel que le bloc avec les pots, le module d'alimentation, le module d'approvisionnement, le module d'évacuation des eaux usées, le module d'éclairage et le module de climatisation sont adaptés à former un kit des éléments encastrables.

Cet agencement permet de rétablir une souveraineté alimentaire locale car le lieu de production, c'est-à-dire, le dispositif selon l'invention, peut être encastré (ou, autrement dit, intégré) dans des logements/locaux/bâtis/cases de toutes tailles/structures dans des villes (y compris dans un centre de la ville, où se trouvent un nombre important des consommateurs de denrées végétales : c'est le cas, par exemple, des parkings sous terrains, bureaux, usines, entrepôts, s'il s'agit des grandes villes existantes, ou compartiments internes, s'il s'agit, par exemples des bateaux, croisières etc. Ainsi, on peut éviter un stockage « long terme » (de quelques jours à quelques semaines) de denrées végétales en privilégiant une consommation des denrées végétales fraiches directement « sur place », c'est-à-dire, sur leur lieu de production qui coïncide alors avec leur lieu de vie et/ou de consommation, comme expliqué précédemment. De même, il est possible d'éviter des trajets logistiques (entre le lieu de production et le lieu de consommation) qui traumatisent généralement les denrées végétales cueillies. De ce fait, il n'est plus nécessaire de devoir cueillir des denrées végétales non mûres afin qu'elles résistent mieux au transport et au stockage. Autrement dit, il est possible de faire mûrir les denrées végétales dans des conditions maîtrisées du dispositif selon l'invention, en évitant ainsi leur mûrissement non optimale dans des lieux éloignés.

Subsidiairement, grâce à cette forme du dispositif selon l'invention en un kit des éléments encastrables, il devient possible de l'installer dans un cadre architectural déjà existant, par exemple, en disposant une première partie de ces éléments encastrables dans une pièce/logement et une deuxième partie de ces éléments encastrables dans une autre pièce/logement. Cela rend la mise en place du dispositif plus aisée et rapide.

Enfin, ce kit des éléments encastrables est particulièrement adaptés pour être monté « éléments par éléments » dans des espaces souterrains clos et limités des abris, par exemple, des abris antiaérien ce qui contribue à améliorer une défense de la population civile en cas d'un conflit armé. De même, les éléments encastrables formant le kit peuvent être déplacés par des voitures de tourisme contrairement au dispositif connu dont le déplacement nécessite un camion apte à transporter ledit conteneur maritime.

Selon l'invention, l'intérieur dudit bloc est compartimenté en une pluralité des zones isolées les unes des autres par des cloisons isolantes thermiquement. Le module de climatisation est adapté à produire et à maintenir une atmosphère contrôlée propre à chaque zone isolée. Le module d'éclairage est adapté à produire et à maintenir un éclairage propre à chaque zone isolée. Les cloisons sont transparentes.

Cela facilite l'éclairage des pots à l'intérieur du bloc.

De préférence, le bloc avec les pots, le module d'alimentation, le module d'approvisionnement, le module d'évacuation des eaux usées, le module d'éclairage et le module de climatisation sont adaptés à être encastrés dans un conteneur maritime isotherme transformé. Dans ces conditions, un puit de lumière est agencé dans un plafond du conteneur, perpendiculairement à la pesanteur, ce puit de lumière étant adapté à laisser passer une lumière naturelle de l'extérieur du conteneur aux pots. Cela élargit des possibilités fonctionnelles du dispositif selon l'invention car permet de d'éclairer davantage les pots par une lumière naturelle et contribue ainsi à l'économie d'énergie.

De préférence, le bloc avec les pots, le module d'alimentation, le module d'approvisionnement, le module d'évacuation des eaux usées, le module d'éclairage et le module de climatisation sont adaptés à être encastrés dans un conteneur maritime isotherme transformé. Dans ces conditions, une baie vitrée est agencée dans un mur du conteneur, le long de la pesanteur, cette baie vitrée étant adaptée à laisser passer une lumière naturelle de l'extérieur du conteneur aux pots. Cela élargit des possibilités fonctionnelles du dispositif selon l'invention car permet de d'éclairer davantage les pots par une lumière naturelle et contribue ainsi à l'économie d'énergie.

De préférence, le module d'alimentation dudit bloc en énergie électrique est autonome.

Grâce à cet agencement, il n'est plus nécessaire de raccorder le dispositif selon l'invention à un réseau électrique fixe. Ce dispositif peut donc fonctionner durablement en utilisant une source embarquée d'énergie qui lui est propre. A titre d'exemple, le module d'alimentation peut convertir en énergie électrique une énergie mécanique (grâce à un courant d'eau ou un courant de vent), et/ou une énergie thermique (grâce à un moteur à combustion interne), et/ou une énergie solaire (grâce à des panneaux solaires), et/ou une énergie chimique (grâce aux batteries). Cela élargit des possibilités fonctionnelles du dispositif selon l'invention car permet de produire des denrées végétales dans des zones sinistrées où le réseau électrique fixe n'existe pas et/ou est endommagé.

De préférence, le module d'approvisionnement dudit bloc en eaux pures est autonome.

Grâce à cet agencement, il n'est plus nécessaire de raccorder le dispositif selon l'invention à un réseau d'eau potable fixe. Ce dispositif peut donc fonctionner durablement en utilisant une source embarquée d'eau pure qui lui est propre. A titre d'exemple, le module d'approvisionnement est adapté à recueillir l'eau de pluie et/ou d'extraire de l'eau à partir de l'air humide. Cela élargit des possibilités fonctionnelles du dispositif selon l'invention car permet de produire des denrées végétales dans des zones sinistrées où le réseau d'eau potable fixe n'existe pas et/ou est endommagé.

De préférence, le module de climatisation comporte l'un au moins parmi des filtres suivants : (a) filtre à particules ; (b) filtre à pollens, ledit filtre étant adapté à faire barrière à des particules porteuses des maladies des plantes dans un flux d'air entrant dans le bloc de l'extérieur.

Grâce à cet agencement, les cultures des plantes qui se développent dans les pots disposés à l'intérieur du bloc sont protégées des maladies pouvant venir par la voie aérienne de l'environnement extérieur. Cela contribue à rendre durable la production de denrées végétales en terre hors sol à l'aide du dispositif selon l'invention.

De préférence, l'une au moins des zones isolées consiste en un tunnel hermétique distinct des autres zones isolées. Dans ces conditions, ce tunnel hermétique comporte une seule étagère adaptée à porter des pots. Selon l'invention, le module d'éclairage comporte des diodes électroluminescentes disposées mobiles dans le tunnel hermétique le long de l'axe de la pesanteur au-dessus de l'étagère, chaque diode électroluminescente étant adapté à éclairer au moins un pot.

Grâce à ces agencements, on peut cultiver plusieurs espèces différentes simultanément dans plusieurs tunnels de culture, puisque chacun dispose de ses propres conditions climatiques, alors même que l'on est dans une même pièce. Plus encore, le module d'éclairage étant mobile le long de l'axe de la pesanteur peut s'adapter à chaque instant à la croissance, et donc la hauteur des feuilles les plus hautes, des plantes dans les pots.

De préférence, le module d'approvisionnement en eaux pures comporte :
- une cuve adaptée à recueillir l'eau de l'atmosphère environnante à l'extérieur du bloc,
- une tuyauterie de drainage reliant la cuve avec des parties basses, dans le sens de la pesanteur, des pots et adaptée à irriguer les parties basses des pots par l'eau issue de la cuve.

Dans ces conditions, la tuyauterie de drainage comporte une branche propre à chaque tunnel hermétique qui, à son tour, comporte un module de nutriment coopérant avec cette branche. Le module de nutriment est adapté à délivrer des nutriments spécifiques aux pots dudit tunnel hermétique.

Grâce à cet agencement, on peut disposer d'une seule cuve d'eau et assurer une distribution séparée de nutriments par tunnel de culture. Plus encore, le dispositif selon l'invention est autonome en eau. En effet, l'eau récupérée de l'atmosphère environnante par la cuve (par exemple, l'eau arrivée dans la cuve depuis une toiture de l'immeuble de ville où est installé - discrètement (c'est-à-dire, sans perturber un aspect architectural dudit immeuble) - le dispositif selon l'invention) est distribuée ensuite à l'intérieur du bloc à l'aide de la tuyauterie de drainage correspondante pour irriguer les parties basses des pots où se trouvent les racines des plantes ce qui contribue *in fine* à une croissance optimale de ces plantes.

De préférence, la cuve est disposée partiellement à l'extérieur du bloc et est adaptée à récupérer l'eau de pluie.

Cet agencement élargit des possibilités fonctionnelles du dispositif selon l'invention, notamment dans des zones humides et pluvieuses. En effet, la cuve disposée partiellement à l'extérieur du bloc par exemple, sur la toiture et/ou sur l'un des murs de l'immeuble où est encastré le kit formant le dispositif selon l'invention, est apte à récupérer de la pluie tombante : cette dernière forme des ruisseaux qui, sous l'effet de la pesanteur, coulent dans la partie de la cuve disposée à l'intérieur du bloc où cette eau pure est stockée en attendant son utilisation ultérieure pour nourrir les racines des plantes. Cela contribue à augmenter une autonomie du dispositif selon l'invention en eaux pures.

De préférence, la cuve est disposée partiellement à l'extérieur du bloc et est adaptée à récupérer par la voie de condensation (grâce à un condensateur externe) l'eau de l'atmosphère environnante à l'extérieur du bloc. Cet agencement élargit des possibilités fonctionnelles du dispositif selon l'invention, notamment dans des zones sèches présentant un climat continental à un gradient de température (entre le jour et la nuit) transitant le point de rosée. En effet, la cuve disposée partiellement à l'extérieur du bloc par exemple, sur la toiture et/ou sur l'un des mur du bloc, est apte à récupérer des fines gouttelettes qui se condensent de l'air environnant (dont la température transite le point de rosée) sur des parois de la cuve disposée à l'extérieur du bloc. Grâce aux forces de tension superficielle, ces fines gouttelettes s'agglomèrent pour former des ruisseaux qui, sous l'effet de la pesanteur, coulent dans la partie de la cuve disposée à l'intérieur du bloc où cette eau pure est stockée en attendant son utilisation ultérieure pour nourrir les racines des plantes. Cela contribue à augmenter une autonomie du dispositif selon l'invention en eaux pures.

De préférence, la partie de la cuve disposée à l'intérieur du bloc est thermiquement isolée. Grâce à cet agencement, la température de l'eau environnante arrivant dans la cuve depuis l'extérieur du bloc ne perturbe pas l'atmosphère contrôlée à l'intérieur du bloc. Cela contribue à minimiser le fonctionnement du module de climatisation coopérant avec le module d'alimentation en énergie électrique pour produire et maintenir ladite atmosphère contrôlée à l'intérieur du bloc. Cela contribue à augmenter une autonomie du dispositif selon l'invention en énergie électrique.

De préférence, le bloc comprend un piège à insectes adapté à assurer une protection contre des insectes extérieures.

Les pièges à insectes installés à l'intérieur du bloc contribuent à protéger les plantes des insectes (mouches, fourmis, etc.) pouvant être ravageurs des plantes et/ou porteurs de maladies.

De préférence, le piège à insectes comporte une surface adhésive adaptée à immobiliser tout insecte touchant cette surface adhésive. Dans ces conditions, le piège à insectes est adapté à émettre une lumière propre à attirer les insectes la nuit.

Cet agencement permet d'augmenter une efficacité des pièges à insectes installés à l'intérieur du bloc et élargit ainsi des possibilités fonctionnelles du dispositif selon l'invention.

De préférence, le module de climatisation est adapté à maintenir une surpression d'air dans chaque tunnel hermétique, ladite surpression d'air étant adaptée à empêcher des insectes nuisibles de pénétrer de l'extérieures du bloc dans le tunnel hermétique.

Cet agencement contribue à protéger des cultures dans les pots des insectes nuisibles et élargit ainsi des possibilités fonctionnelles du dispositif selon l'invention.

De préférence, le bloc comporte des traces d'hormones adaptées à former une barrière naturelle aux insectes extérieurs nuisibles à l'intérieur du bloc.

Cet agencement contribue à protéger des cultures dans les pots des insectes nuisibles dans le respect des normes environnementaux et élargit ainsi des possibilités fonctionnelles du dispositif selon l'invention.

De préférence, ce bloc est compartimenté en une pluralité des zones isolées les unes des autres par des cloisons transparentes et isolantes thermiquement. Dans ces conditions, le module de climatisation est adapté à produire et à maintenir une atmosphère contrôlée propre à chaque zone isolée. Le module d'éclairage est adapté à produire et à maintenir un éclairage propre à chaque zone isolée.

Grâce à ces agencements, il est possible de partager un espace intérieur du bloc en plusieurs zones isolées, chacun d'elles étant adaptée (avec des conditions de température, d'humidité, d'éclairage sélectives) à chaque espèce de plantes et/ou à une étape spécifique de croissance de cette espèce des plantes. Cela permet d'optimiser et/ou de rendre plus variée une production des denrées végétales à l'aide du dispositif selon l'invention et, de ce fait, élargit ses possibilités fonctionnelles.

De préférence, une première zone isolée, dite nurserie des plantes, comporte une première série des pots remplis d'un mélange compacté de terre et adaptée à recevoir des organes de plantes consistant en graines à germer.

Grâce au mélange compacté de terre disposé dans les pots installés dans la nurserie des plantes, les racines de ces plantes sont en terre, comme dans les champs. De ce fait, les nutriments indispensables pour une croissance optimale desdites racines sont apportés naturellement par l'eau de pluie traversant la terre elle-même, sans aucun autre ajout chimique. En outre, les graines germant dans ce mélange compacté de terre ainsi que les racines évoluant dans cette terre, cela contribue à former des plantes présentant un système immunitaire (résistance à des maladies) plus fort, proche de celui des plantes cultivées en plein air dans des champs de l'agriculture biologique. Cela contribue au développement durable, inclusive et respectueux de l'environnement.

De préférence, la nurserie des plantes comporte une première porte coulissante donnant accès (depuis l'intérieur du bloc) aux pots avec des graines à germer. Grâce à cet agencement, l'accès à la nurserie des plantes est facilité.

De préférence, une deuxième zone isolée, dite chambre de culture, comporte une deuxième série des pots remplis d'un mélange de terreau et de roches volcaniques et adaptée à recevoir des organes de plantes consistant en pousses des plantes.

Ce mélange de terreau et de roches volcaniques contribue à aérer les racines des plantes dans les pots disposés dans la chambre de culture. En outre, cet agencement facilite une nutrition optimale des plantes en croissance par l'eau de pluie sans ajout des engrais chimiques. En outre, les racines évoluant dans ce mélange de terreau et de roches volcaniques résistent mieux aux pathogènes (maladies, insectes). Cela contribue au développement durable, inclusive et respectueux de l'environnement.

De préférence, au moins un pot (et, notamment, chaque pot disposé dans la chambre de culture) comporte un soubassement aéré adapté à oxygéner en continue des racines des plantes en croissance.

Cet agencement facilite une oxygénation des plantes en croissance. Cela contribue au développement durable, inclusive et respectueux de l'environnement.

De préférence, la chambre de culture comporte une deuxième porte coulissante donnant accès (depuis l'intérieur du bloc) aux pots avec des plantes en croissance. Grâce à cet agencement, l'accès à la chambre de culture est facilité.

De préférence, une troisième zone isolée forme un sas d'entrée dans le bloc. Dans ces conditions ce sas d'entrée comporte :
- une porte extérieure adaptée à séparer le sas d'entrée de l'extérieur du bloc, et
- une porte intérieure adaptée à séparer le sas d'entrée de l'intérieur du bloc.
Le module de climatisation coopérant avec l'une au moins parmi des portes suivantes : (a) la porte extérieure ; (b) la porte intérieure, est adapté à déclencher un rideau d'air orienté le long de la pesanteur, dès l'ouverture de cette porte.

Deux portes de sas d'entrée et le rideau d'air se déclenchant dès l'ouverture de l'une de ces deux portes contribuent à limiter un accès à l'intérieur du bloc des insectes et/ou d'autres graines volantes pouvant perturber les cultures en place à l'intérieur du bloc. Ainsi, une production des denrées végétales à l'aide du dispositif selon l'invention peut être pratiquée dans un environnement phytosanitaire a priori hostile aux plantes se développant à l'intérieur du bloc. En outre, ces agencements permettent également de préserver une flore environnante des cultures évoluant à l'intérieur du bloc. Ainsi, il est possible d'installer le dispositif selon l'invention dans des réserves naturelles protégées où toute autre production agricole est proscrite. Cela élargit des possibilités fonctionnelles du dispositif selon l'invention.

De préférence, le présent dispositif comporte en outre :
- des capteurs disposés à l'intérieur du bloc et adaptés à recueillir des données propre à l'atmosphère contrôlée à l'intérieur du bloc ;
- un module de gestion muni d'une interface homme-machine et adapté à coopérer avec :
   ∘ ces capteurs,
   ∘ le module d'alimentation en énergie électrique,
   ∘ le module d'approvisionnement en eaux pures,
   ∘ le module d'évacuation des eaux usées,
   ∘ le module d'éclairage,
   ∘ le module de climatisation.

Grâce à cet agencement, il est possible de gérer de manière centralisée, y compris à distance, en temps réel et en prenant en compte une pluralité des paramètres (à l'aide des différents capteurs), le dispositif selon l'invention afin d'obtenir une synergie issue du fonctionnement sélectif de l'ensemble des modules en vue d'obtenir une évolution optimale et coordonnées du vivant (plantes). Par exemple, cela permet de :
- résoudre une intermittence de la production alimentaire selon les saisons et/ou les conditions météorologiques à l'extérieur du bloc ;
- supprimer des produits chimiques (engrais, pesticides, fongicides) lors de la production des denrées végétales par ledit dispositif,
- aider à combattre une malnutrition dans certaines zones mondiales, par exemple, éloignées des circuits logistiques communs.
En résumé, ladite synergie élargit des possibilités fonctionnelles du dispositif selon l'invention et, plus généralement, contribue au développement durable, inclusive et respectueux de l'environnement.

De préférence, l'interface homme-machine est portable et est adaptée à être liée avec le module de gestion à l'aide des technologies de télécommunication.

Outre le fait que cet agencement rend une utilisation du dispositif selon l'invention plus aisée, cela permet de gérer la production de denrées végétales sans avoir un accès physique à l'intérieur du bloc ce qui minimise une introduction hasardeuse et involontaire des pathogènes par un opérateur pénétrant dans le sas. Cela élargit des possibilités fonctionnelles du dispositif selon l'invention.

De préférence, le module de climatisation comporte un échangeur géothermique air-sol adapté à réguler un état thermique d'un flux d'air entrant dans le bloc de l'extérieur et une ventilation mécanique centralisée à double flux couplée avec cet échangeur géothermique air-sol.

Cet agencement minimise une consommation de l'énergie et, de ce fait, élargit des possibilités fonctionnelles du dispositif selon l'invention. Cela contribue au développement durable, inclusive et respectueux de l'environnement.

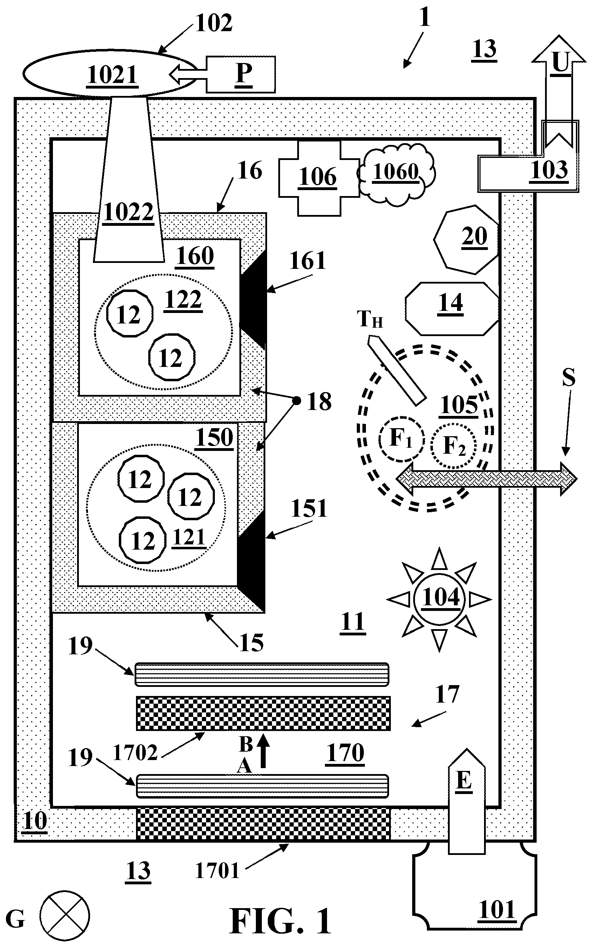

D'autres caractéristiques et avantages de l'invention ressortiront clairement de la description qui en est faite ci-après, à titre indicatif et nullement limitatif, en référence au figure 1 annexée qui représente schématiquement, en vue simplifiée de dessus (le long de la pesanteur) un exemple d'un dispositif de production de denrées végétales en terre hors sol selon l'invention dans lequel le bloc avec les pots, le module d'alimentation, le module d'approvisionnement, le module d'évacuation des eaux usées, le module d'éclairage et le module de climatisation sont adaptés à former un kit des éléments encastrables, tous ces éléments encastrables étant intégrés dans un conteneur maritime isotherme transformé.

Comme annoncé précédemment et illustré sur la figure 1, l'invention concerne un dispositif 1 de production de denrées végétales en terre hors sol comportant un bloc 10 thermiquement isolé coopérant avec :
- un module d'alimentation 101 du bloc 10 en énergie électrique E,
- un module d'approvisionnement 102 du bloc 10 en eaux pures P,
- un module d'évacuation 103 des eaux usées U issues du bloc 10,
- un module d'éclairage 104 coopérant avec le module d'alimentation 101 en énergie électrique E et adapté à éclairer l'intérieur 11 du bloc 10,
- un module de climatisation 105 coopérant avec le module d'alimentation 101 en énergie électrique E et adapté à produire et à maintenir une atmosphère contrôlée T_{H} à l'intérieur 11 du bloc 10.
En outre, ce bloc 10 thermiquement isolé comporte des pots 12 disposés dans l'atmosphère contrôlée T_{H} (au moins en température et en humidité) à l'intérieur 11 du bloc 10. Chacun de ces pots 12 est éclairé par le module d'éclairage 104 et adapté à recevoir un organe de plante et à être irrigué par les eaux pures P amenées par le module d'approvisionnement 102 du bloc 10 en eaux pures P.

Selon l'invention, le bloc 10 avec les pots 12, le module d'alimentation 101, le module d'approvisionnement 102, le module d'évacuation 103 des eaux usées U, le module d'éclairage 104 et le module de climatisation 105 sont adaptés à former un kit des éléments encastrables. Ce kit des éléments encastrables peut être transporté à l'aide des moyens de transport terrestre (par exemple, à l'aide d'un camion), et/ou transport maritime (par exemple, à l'aide d'un bateau), et/ou transport aérien (par exemple, à l'aide d'un avion ou un hélicoptère).

Grâce à cette mobilité du kit, il est possible de faire face à une inégale répartition des ressources alimentaires à travers le monde (entre les pays), entre la campagne et les villes. En effet, la production agricole actuelle varie selon les conditions météorologiques, d'invasion d'insectes, de la survenance de maladies, de l'ouverture ou fermeture des frontières à l'importation (Covid 19). La production alimentaire à l'aide du dispositif selon l'invention permet d'assurer une production stable, permanente toute l'année, fonctionnant partout dans le monde, quelles que soient les conditions extérieures dues à des instabilités politiques, sanitaires, météorologiques etc. Le fait d'être mobile, permet de transporter le kit là où il est nécessaire de montrer ledit dispositif selon l'invention afin de produire des denrées végétales (fruits, légumes, plantes aromatiques, plantes médicinales, fleurs) au plus près de la population qui en éprouve le besoin, par exemple, dans un immeuble de ville, sur un bateau, dans une usine, etc.

De préférence, le bloc 10 est compartimenté en une pluralité des zones isolées 15, 16, 17 les unes des autres par des cloisons 18 isolantes thermiquement. Le module de climatisation 105 est adapté à produire et à maintenir une atmosphère contrôlée T_{H} propre à chaque zone isolée. Le module d'éclairage 104 est adapté à produire et à maintenir un éclairage propre à chaque zone isolée 15, 16, 17. Les cloisons 18 sont transparentes.

Comme illustré sur la figure 1, le bloc 10 avec les pots 12, le module d'alimentation 101, le module d'approvisionnement 102, le module d'évacuation 103 des eaux usées U, le module d'éclairage 104 et le module de climatisation 105 sont adaptés à être encastrés dans un conteneur maritime isotherme transformé. Grâce à cet agencement, il est possible, entre autres, de recycler un conteneur maritime pour un usage nouvel. Pour le rendre isotherme on peut déposer sur des parois internes du conteneur maritime une mousse polyuréthane d'une première épaisseur égale, par exemple, à 10 cm. En outre, une toiture du conteneur maritime peut être isolée à l'aide d'une laine minérale d'une deuxième épaisseur comprise entre 20 cm et 40 cm.

Un puit de lumière (non représenté) peut être agencé dans un plafond du conteneur, perpendiculairement à la pesanteur G, ce puit de lumière étant adapté à laisser passer une lumière naturelle de l'extérieur du conteneur aux pots 12.

De même, une baie vitrée (non représentée) peut être agencée dans un mur du conteneur, le long de la pesanteur G, cette baie vitrée étant adaptée à laisser passer une lumière naturelle de l'extérieur du conteneur aux pots 12.

Grâce à cet agencement, l'intérieur 11 du bloc 10 peut être éclairé, à travers cette baie vitrée, par une lumière naturelle qui est nécessaire pour une croissance optimale des plantes dans les pots 12.

De préférence, la baie vitrée dans le mur du conteneur peut comporter un triple vitrage avec deux lames de gaz rare disposées entre les trois vitres.

Cet agencement contribue à améliorer une isolation thermique du bloc 10.

De même, le puit de lumière dans le plafond du conteneur peut comporter un triple vitrage avec deux lames de gaz rare disposées entre les trois vitres.

Cet agencement contribue à améliorer une isolation thermique du bloc 10.

Le module de climatisation 105 peut comporter l'un au moins parmi des filtres suivants : (a) filtre à particules F₁ ; (b) filtre à pollens F₂, ledit filtre F₁, F₂, étant adapté à faire barrière à des particules porteuses des maladies des plantes dans un flux d'air entrant dans le bloc 10 de l'extérieur 13.

L'une au moins des zones isolées 15 consiste en un tunnel hermétique (non représenté) distinct des autres zones isolées 16. Ce tunnel hermétique comporte une seule étagère (non représentée) adaptée à porter des pots 12 ! Le module d'éclairage 104 comporte des diodes électroluminescentes disposées mobiles dans le tunnel hermétique le long de l'axe de la pesanteur G au-dessus de l'étagère, chaque diode électroluminescente étant adapté à éclairer au moins un pot 12.

Le module d'approvisionnement 102 en eaux pures P peut comporter :
- une cuve 1021 disposée à l'extérieur 13 du bloc 10 et adaptée à recueillir l'eau de pluie,
- une tuyauterie de drainage 1022 reliant la cuve 1021 avec des parties basses (non représentées), dans le sens de la pesanteur G, des pots 12 et adaptée à irriguer les parties basses des pots 12 par l'eau de pluie.

Dans ces conditions, la tuyauterie de drainage 1022 comporte une branche propre à chaque tunnel hermétique. Chaque tunnel hermétique comporte un module de nutriment coopérant avec cette branche. Le module de nutriment est adapté à délivrer des nutriments spécifiques aux pots 12 dudit tunnel hermétique.

Le bloc 10 comprend, de préférence, un piège 14 à insectes adapté à assurer une protection contre des insectes extérieures.

Ce piège 14 à insectes comporte une surface adhésive adaptée à immobiliser tout insecte touchant cette surface adhésive. Dans ces conditions, le piège 14 à insectes est adapté à émettre une lumière propre à attirer les insectes la nuit.

Le module de climatisation 105 est adapté à maintenir une surpression d'air dans chaque tunnel hermétique, ladite surpression d'air étant adaptée à empêcher des insectes nuisibles de pénétrer de l'extérieures du bloc 10 dans le tunnel hermétique.

Le bloc 10 comporte des traces d'hormones adaptées à former une barrière naturelle aux insectes extérieurs nuisibles à l'intérieur 11 du bloc 10.

Comme illustré sur la figure 1, une première zone isolée 15, dite nurserie des plantes 150, comporte une première série 121 des pots 12 remplis d'un mélange compacté de terre et adaptée à recevoir des organes de plantes consistant en graines à germer.

Cette nurserie des plantes 150 comporte une première porte coulissante 151 donnant accès (depuis l'intérieur 11 du bloc 10) aux pots 12 avec des graines à germer.

Comme illustré sur la figure 1, une deuxième zone isolée 16, dite chambre de culture 160, comporte une deuxième série 122 des pots 12 remplis d'un mélange de terreau et de roches volcaniques et adaptée à recevoir des organes de plantes consistant en pousses des plantes.

Chaque pot 12 disposé dans la chambre de culture 160 comporte un soubassement aéré adapté à oxygéner en continue des racines des plantes en croissance.

La chambre de culture 160 comporte une deuxième porte coulissante 161 donnant accès (depuis l'intérieur 11 du bloc 10) aux pots 12 avec des plantes en croissance.

De préférence, la chambre de culture 160 comporte un plancher recouvert d'une peinture (ou d'un revêtement) réfléchissant (une lumière environnante). Cet agencement contribue à amplifier une luminosité globale dans la chambre de culture 160.

Comme illustré sur la figure 1, une troisième zone isolée 17 forme un sas d'entrée 170 dans le bloc 10. Ce sas d'entrée 170 comporte :
- une porte extérieure 1701 adaptée à séparer le sas d'entrée 170 de l'extérieur 13 du bloc 10, et
- une porte intérieure 1702 adaptée à séparer le sas d'entrée 170 de l'intérieur 11 du bloc 10.
Le module de climatisation 105 coopérant avec l'une au moins parmi des portes suivantes : (a) la porte extérieure 1701 ; (b) la porte intérieure 1702, est adapté à déclencher un rideau d'air 19 orienté le long de la pesanteur G, dès l'ouverture de cette porte 1701, 1702.

Dans l'exemple sur la figure 1, le module de climatisation 105 comporte deux rideaux d'air 19 :
- l'une disposée entre la porte extérieure 1701 et la porte intérieure 1702, et
- l'autre disposée à l'intérieur 11 du bloc 10 derrière la porte intérieure 1702 (selon la flèche AB sur la figure 1 indiquant le sens de l'entrée pour un opérateur dans le bloc 10).

Cet agencement contribue à protéger davantage les plantes à l'intérieur 11 du bloc 10 contre des insectes et/ou d'autres graines volantes pouvant venir de l'extérieur 13 du bloc 10 via la porte extérieure 1701.

Comme illustré sur la figure 1, le dispositif selon l'invention peut comporter des capteurs 20 disposés à l'intérieur 11 du bloc 10 et adaptés à recueillir des données propre à l'atmosphère contrôlée T_{H} à l'intérieur 11 du bloc 10. Ces capteurs 20 coopèrent avec le module d'alimentation 101 qui les alimente en énergie électrique E. Dans ces conditions, le dispositif selon l'invention comporte en outre un module de gestion 106 muni d'une interface homme-machine 1060 et adapté à coopérer avec :
∘ ces capteurs 20,
∘ le module d'alimentation 101 en énergie électrique E,
∘ le module d'approvisionnement 102 en eaux pures P,
∘ le module d'évacuation 103 des eaux usées U,
∘ le module d'éclairage 104,
∘ le module de climatisation 105.

L'interface homme-machine 1060 est, préférablement, portable et est adaptée à être liée avec le module de gestion 106 à l'aide des technologies de télécommunication.

Le module de climatisation 105 comporte un échangeur géothermique air-sol S adapté à réguler un état thermique d'un flux d'air entrant dans le bloc 10 de l'extérieur 13.

Pour un fonctionnement optimal, cet échangeur géothermique air-sol S comporte un tube creux en matière plastique (de préférence, chlorure de polyvinyle, dit, PVC) présentant un diamètre de 20 cm à 30 cm (non représenté). Ce tube creux est enterré à plus de 1,5 m de profondeur, sur plus de 50 m de longueur. L'échangeur géothermique air-sol S comporte une bouche d'entrée d'air émergée de la surface du sol, par exemple, à 60 cm, et équipée d'un grillage dit « anti-insecte », c'est-à-dire, le grillage comportant un maillage suffisamment fin pour interdire une pénétration des insectes dans le tube creux de l'échangeur géothermique air-sol S. Pour assurer une régulation thermique optimale à l'intérieur 11 du bloc 10, le module de climatisation 105 comporte en outre une ventilation mécanique centralisée (non représentée), cette dernière étant couplée avec l'échangeur géothermique air-sol S, c'est-à-dire, avec le tube creux, à l'opposé de la bouche d'entrée d'air émergée de la surface du sol.

De préférence, la ventilation mécanique centralisée est à double flux pour permettre de récupérer davantage des calories.

Comme expliqué précédemment, le module de gestion 106 assure une gestion optimale du module de climatisation 105 en ordonnant des régimes sélectifs de fonctionnement pour le couple « échangeur géothermique air-sol S/ventilation mécanique centralisée », au vu des signaux de retour issus des capteurs 20, de sorte à produire et à maintenir une atmosphère contrôlée T_{H} à l'intérieur 11 du bloc 10 selon des consignes préalablement introduites via l'interface homme-machine 1060 pour optimiser le développement des cultures de plantes dans les pots 12.

Pour réguler une hygrométrie à l'intérieur 11 du bloc 10, le module de climatisation 105 comporte un humidificateur (non représenté) relié au module d'approvisionnement 102 en eaux pures P et, notamment, à la cuve 1021. La régulation hygrométrique s'opère par le module de climatisation 105 coopérant avec l'humidificateur du module de climatisation 105 au vu des signaux de retour issus des capteurs 20 et des consignes préalablement introduites via l'interface homme-machine 1060.

De préférence, le bloc 10 peut comporter des étagères faites en structures métalliques porteuses (par exemple, du type cornières) suffisamment résistantes pour porter les pots 12 qui peuvent peser (avec terre, plantes, roches) plusieurs centaines de kilogrammes.

Ces étagères facilitent une disposition ordonnée des pots 12 à l'intérieur 11 du bloc 10.

De préférence, chaque étagère comprend un plancher en bois hydrofuges.

Cet agencement contribue à augmenter une durée de vie des étagères.

De manière alternative, chaque étagère peut comprendre un plancher métallique inoxydable.

Cet agencement contribue à lutter contre une moisissure qui peux se former au vu de l'humidité élevée (par exemple, de 80% à 90%) à l'intérieur 11 du bloc 10.

Le module d'approvisionnement 102 en eaux pures P peut comporter des filtres (par exemple, des filtres osmotiques, filtre à charbon actif, filtre à sable, filtre comportant une cartouche émettrice des rayons utlra-violets) de purification de l'eau de l'atmosphère environnante issue de l'extérieur 13 du bloc 10 et collectée par la cuve 1021.

Cet agencement contribue à préserver une pureté de l'eau utilisé pour irriguer les plantes sans utilisation des agents chimiques de conservation de l'eau.

Le module d'approvisionnement 102 en eaux pures P peut comporter un compresseur (non représenté) lié avec la tuyauterie de drainage 1022 reliant la cuve 1021 avec des parties basses, dans le sens de la pesanteur G, des pots 12.

Etant commandé par le module de gestion 106, ce compresseur peut doser finement une quantité de l'eau issue de la cuve 1021. Cela permet d'irriguer de manière sélective les parties basses des pots 12 et, *in fine,* contribue à élargir des possibilités fonctionnelles du dispositif 1 selon l'invention pour produire de manière optimale des denrées végétales.

De préférence, la cuve 1021 est fabriquée en matériau opaque.

Cet agencement contribue à limiter un développement de micro-organismes photosensibles dans l'eau stockée dans la cuve 1021.

De préférence, le module d'approvisionnement 102 en eaux pures P comporte des gouttières (non représentée) disposées à l'extérieur 13, par exemple, sur la toiture du bloc 10. Dans ces conditions, ces gouttières sont adaptées à recueillir l'eau de pluie à l'extérieur 13 du bloc 10 et sont liées avec la cuve 1021.

Ces gouttières facilitent une récupération de l'eau de pluie et son stockage dans la cuve 1021. Cela contribue à augmenter une autonomie en eaux pures P du dispositif 1 selon l'invention.

De préférence, la cuve 1021 comporte un condensateur interne (non représenté) disposé à l'intérieur 11 du bloc 10 et adapté à récupérer par la voie de condensation l'eau de l'atmosphère contrôlée T_{H} à l'intérieur 11 du bloc 10.

Grâce à ce condensateur interne il est possible de récupérer des excédents de l'humidité provenant de l'évapotranspiration des plantes dans les pots 12 irrigués, comme évoqué ci-dessus. Cela contribue à :
- augmenter une autonomie du dispositif selon l'invention en eaux pures et,
- subsidiairement, contrôler davantage l'atmosphère contrôlée T_{H} à l'intérieur 11 du bloc 10.

De préférence, le bloc 10 comporte des puits de lumière (non représentés) disposés sur le plafond du bloc 10.

Ces puits de lumière apportent de la lumière naturelle à l'intérieur 11 du bloc 10 ce qui contribue à élargir un spectre de lumière artificielle émis par module d'éclairage 104. Ainsi, les plantes se développent dans les pots 12 en profitant des conditions d'éclairage quasiment identiques à celles observées dans des champs en plein air. Le dispositif 1 selon l'invention est, de ce fait, respectueux de l'environnement et est conforme aux principes du développement durable et inclusif.

De préférence, le module d'éclairage 104 comporte des diodes électroluminescentes (dite « LED ») adaptées à émettre des lumières présentant des différentes longueurs d'onde.

Cet agencement contribue à améliorer un éclairage à l'intérieur 11 du bloc 10 et à l'adapter aux plantes qui se développent dans les pots 12.

De préférence, chaque diode électroluminescente est disposée au-dessus (dans le sens opposé à la pesanteur G) de chaque plantes, à une hauteur sélective optimisée pour cette plante.

Cet agencement contribue à améliorer un éclairage sélectif propre à chaque plante pour optimiser son développement dans le pot 12.

De préférence, le dispositif 1 est adapté pour accueillir des plantes en polyculture.

Cet agencement contribue à renforcer des défenses immunitaires des plantes dans les pots 12.

De préférence, le bloc 10 comporte entre deux et quatre chambre de culture 160. Dans ces conditions, chaque chambre de culture 160 est adaptée à une espèce de plantes qui lui est propre.

Grâce à cet agencement, il est possible de cultiver (et faire coexister) dans le dispositif 1 selon l'invention en même temps plusieurs espèces de plantes ayant chacune des besoins différents en humidité, température, terre, ventilation, lumière etc. Cela contribue à élargir des possibilités fonctionnelles du dispositif 1 selon l'invention.

Le dispositif 1 selon l'invention fonctionne de la manière suivante.

Les graines des plantes sont mises en nurserie des plantes 150 (avec des conditions de température et d'humidité spécifiques pour chaque espèce de plantes) pendant quelques jours (par exemple, de 5 jours à 10 jours), le temps pour chaque graine de germer. Dans cette nurserie des plantes 150 les graines sont mises dans les pots 12, dans un mélange de terre compact de forme cubique (quelques centimètres mesurés de côté, le longe de la pesanteur G).

Par la suite, les jeunes pousses sont transférées en terre hors sol (mélange de terreau et de roches volcaniques pour assurer une légèreté suffisante de la terre selon des proportions variables selon les espèces), dans les chambres de culture 160 correspondantes disposant des pots 12 (de différentes hauteurs et diamètres selon les espèces). Ces derniers sont irrigués à l'eau de pluie (fournie par le module d'approvisionnement 102) sur des durées variables selon le volume du chaque pot 12. Chaque pot 12 dispose d'un soubassement aéré pour faciliter une oxygénation en continue des racines des plantes. Les pots 12 présentent des structures étanches ou poreuses (selon le type des plantes). Les pots 12 sont mis sur des étagères disposant d'un système d'irrigation d'eau de pluie par le bas (dans le sens de la pesanteur G). Cela permet d'éviter un lessivage des sols. Des conditions climatiques optimales (humidité, température, lumière, taux de CO², ventilation, etc.) sont maintenues (par le module d'éclairage 104 et le module de climatisation 105) pour les espèces des plantes mises dans la même chambre de culture 160.

## Revendications

1. Dispositif (1) de production de denrées végétales en terre hors sol comportant :
• un bloc (10) thermiquement isolé coopérant avec :
∘ un module d'alimentation (101) du bloc (10) en énergie électrique (E),
∘ un module d'approvisionnement (102) du bloc (10) en eaux pures (P),
∘ un module d'évacuation (103) des eaux usées (U) issues du bloc (10),
∘ un module d'éclairage (104) coopérant avec le module d'alimentation (101) en énergie électrique (E) et adapté à éclairer l'intérieur (11) du bloc (10),
∘ un module de climatisation (105) coopérant avec le module d'alimentation (101) en énergie électrique (E) et adapté à produire et à maintenir une atmosphère contrôlée (T_{H}) à l'intérieur (11) du bloc (10),
• des pots (12) disposés dans l'atmosphère contrôlée (T_{H}) à l'intérieur (11) du bloc (10), chacun de ces pots (12) étant éclairé par le module d'éclairage (104) et adapté à :
∘ recevoir un organe de plante,
∘ être irrigué par les eaux pures (P) amenées par le module d'approvisionnement (102) du bloc (10) en eaux pures (P),
le bloc (10) avec les pots (12), le module d'alimentation (101), le module d'approvisionnement (102), le module d'évacuation (103) des eaux usées (U), le module d'éclairage (104) et le module de climatisation (105) étant adaptés à former un kit des éléments encastrables,
**caractérisé en ce que** l'intérieur (11) dudit bloc (10) est compartimenté en une pluralité des zones isolées (15), (16), (17) les unes des autres par des cloisons (18) isolantes thermiquement, **en ce que** le module de climatisation (105) est adapté à produire et à maintenir une atmosphère contrôlée (T_{H}) propre à chaque zone isolée (15), (16), (17), **en ce que** le module d'éclairage (104) est adapté à produire et à maintenir un éclairage propre à chaque zone isolée (15), (16), (17), **en ce que** les cloisons (18) sont transparentes, **en ce que** l'une au moins des zones isolées (15) consiste en un tunnel hermétique distinct des autres zones isolées (16), **en ce que** ce tunnel hermétique comporte une seule étagère adaptée à porter des pots (12), et **en ce que** le module d'éclairage (104) comporte des diodes électroluminescentes disposées mobiles dans le tunnel hermétique le long de l'axe de la pesanteur (G) au-dessus de l'étagère, chaque diode électroluminescente étant adapté à éclairer au moins un pot (12).

2. Dispositif (1) selon la revendication 1, **caractérisé en ce que** le bloc (10) avec les pots (12), le module d'alimentation (101), le module d'approvisionnement (102), le module d'évacuation (103) des eaux usées (U), le module d'éclairage (104) et le module de climatisation (105) sont adaptés à être encastrés dans un conteneur maritime isotherme transformé, et **en ce qu'**un puit de lumière est agencé dans un plafond du conteneur, perpendiculairement à la pesanteur (G), ce puit de lumière étant adapté à laisser passer une lumière naturelle de l'extérieur du conteneur aux pots (12).

3. Dispositif (1) selon la revendication 1 ou 2, **caractérisé en ce que** le bloc (10) avec les pots (12), le module d'alimentation (101), le module d'approvisionnement (102), le module d'évacuation (103) des eaux usées (U), le module d'éclairage (104) et le module de climatisation (105) sont adaptés à être encastrés dans un conteneur maritime isotherme transformé, et **en ce qu'**une baie vitrée est agencée dans un mur du conteneur, le long de la pesanteur (G), cette baie vitrée étant adaptée à laisser passer une lumière naturelle de l'extérieur du conteneur aux pots (12).

4. Dispositif (1) selon la revendication 1, **caractérisé en ce que** le module d'approvisionnement (102) en eaux pures (P) comporte :
• une cuve (1021) adaptée à recueillir l'eau de l'atmosphère environnante à l'extérieur (13) du bloc (10),
• une tuyauterie de drainage (1022) reliant la cuve (1021) avec des parties basses, dans le sens de la pesanteur (G), des pots (12) et adaptée à irriguer les parties basses des pots (12) par l'eau issue de la cuve (1021),
**en ce que** la tuyauterie de drainage (1022) comporte une branche propre à chaque tunnel hermétique, **en ce que** chaque tunnel hermétique comporte un module de nutriment coopérant avec cette branche, et **en ce que** le module de nutriment est adapté à délivrer des nutriments spécifiques aux pots (12) dudit tunnel hermétique.

5. Dispositif (1) selon la revendication 1 ou 4, **caractérisé en ce que** le module de climatisation (105) est adapté à maintenir une surpression d'air dans chaque tunnel hermétique, ladite surpression d'air étant adaptée à empêcher des insectes nuisibles de pénétrer de l'extérieures du bloc (10) dans le tunnel hermétique.

6. Dispositif (1) selon l'une quelconque des revendications 1 à 5, **caractérisé en ce que** le bloc (10) comporte des traces d'hormones adaptées à former une barrière naturelle aux insectes extérieurs nuisibles à l'intérieur (11) du bloc (10).

7. Dispositif (1) selon l'une quelconque des revendications 1 à 6, **caractérisé en ce que** le module d'approvisionnement (102) en eaux pures (P) comporte une succession des filtres adaptés à purifier les eaux (P) entrant dans le bloc (10) sans les stériliser.

8. Dispositif (1) selon l'une quelconque des revendications 1 à 7, **caractérisé en ce que** au moins un pot (12) comporte un soubassement aéré adapté à oxygéner en continue des racines des plantes en croissance.

9. Dispositif (1) selon l'une quelconque des revendications 1 à 8, **caractérisé en ce qu'**il comporte en outre :
• des capteurs (20) disposés à l'intérieur (11) du bloc (10) et adaptés à recueillir des données propre à l'atmosphère contrôlée (T_{H}) à l'intérieur (11) du bloc (10) ;
• un module de gestion (106) muni d'une interface homme-machine (1060) et adapté à coopérer avec :
∘ ces capteurs (20),
∘ le module d'alimentation (101) en énergie électrique (E),
∘ le module d'approvisionnement (102) en eaux pures (P),
∘ le module d'évacuation (103) des eaux usées (U),
∘ le module d'éclairage (104),
∘ le module de climatisation (105).

10. Dispositif (1) selon l'une quelconque des revendications 1 à 9, **caractérisé en ce que** le module de climatisation (105) comporte :
• un échangeur géothermique air-sol (S) adapté à réguler un état thermique d'un flux d'air entrant dans le bloc (10) de l'extérieur (13), et
• une ventilation mécanique centralisée à double flux couplée avec cet échangeur géothermique air-sol (S).

## Patentansprüche

1. Vorrichtung (1) zur oberirdischen Erzeugung von pflanzlichen Nahrungsmitteln in Erde, umfassend:
• einem wärmeisolierten Block (10), der zusammenwirkt mit:
∘ einem Modul (101) zur Versorgung des Blocks (10) mit elektrischer Energie (E),
∘ einem Modul (102) zur Zuführung von Reinwasser (P) zu dem Block (10),
∘ einem Modul (103) zur Ableitung von Abwasser (U), das aus dem Block (10) stammt,
∘ einem Beleuchtungsmodul (104), das mit dem Versorgungsmodul (101) für elektrische Energie (E) zusammenwirkt und dazu ausgelegt ist, das Innere (11) des Blocks (10) zu beleuchten,
∘ ein Klimatisierungsmodul (105), das mit dem Versorgungsmodul (101) für elektrische Energie (E) zusammenwirkt und dazu ausgelegt ist, eine kontrollierte Atmosphäre (T_{H}) im Inneren (11) des Blocks (10) zu erzeugen und aufrechtzuerhalten,
• Töpfe (12), die in der kontrollierten Atmosphäre (T_{H}) im Inneren (11) des Blocks (10) angeordnet sind, wobei jeder dieser Töpfe (12) durch das Beleuchtungsmodul (104) beleuchtet wird und ausgelegt ist zum:
∘ Aufnehmen eines Pflanzenorgans,
∘ Bewässertwerden durch das vom Zuführmodul (102) für Reinwasser (P) des Blocks (10) geleitete Reinwasser (P),
wobei der Block (10) mit den Töpfen (12), das Versorgungsmodul (101), das Zuführmodul (102), das Ableitungsmodul (103) für Abwasser (U), das Beleuchtungsmodul (104) und das Klimatisierungsmodul (105) zum Bilden eines Bausatzes aus Einbauelementen ausgelegt sind,
**dadurch gekennzeichnet, dass** das Innere (11) des Blocks (10) in eine Vielzahl von Bereichen (15), (16), (17) unterteilt ist, die durch wärmeisolierende Trennwände (18) voneinander isoliert sind, **dadurch, dass** das Klimatisierungsmodul (105) dazu ausgelegt ist, eine eigene kontrollierte Atmosphäre (TH) für jeden isolierten Bereich (15), (16), (17) zu erzeugen und aufrechtzuerhalten, **dadurch, dass** das Beleuchtungsmodul (104) dazu ausgelegt ist, für jeden isolierten Bereich (15), (16), (17) eine eigene Beleuchtung zu erzeugen und aufrechtzuerhalten, **dadurch, dass** die Trennwände (18) transparent sind, **dadurch, dass** mindestens einer der isolierten Bereiche (15) aus einem abgedichteten Tunnel besteht, der von den anderen isolierten Bereichen (16) getrennt ist, **dadurch, dass** dieser abgedichtete Tunnel ein einzelnes Regal umfasst, das zum Tragen von Töpfen (12) ausgelegt ist, und **dadurch, dass** das Beleuchtungsmodul (104) Leuchtdioden umfasst, die in dem abgedichteten Tunnel entlang der Schwerkraftachse (G) über dem Regal bewegbar angeordnet sind, wobei jede Leuchtdiode dazu ausgelegt ist, mindestens einen Topf (12) zu beleuchten.

2. Vorrichtung (1) nach Anspruch 1, **dadurch gekennzeichnet, dass** der Block (10) mit den Töpfen (12), das Versorgungsmodul (101), das Zuführmodul (102), das Ableitungsmodul (103) für Abwasser(U), das Beleuchtungsmodul (104) und das Klimatisierungsmodul (105) dazu ausgelegt sind, in einen umgebauten isothermischen Seecontainer eingebettet zu werden, und **dadurch, dass** in einer Decke des Containers senkrecht zur Schwerkraft (G) ein Lichtschacht angeordnet ist, wobei dieser Lichtschacht dazu ausgelegt ist, natürliches Licht von außerhalb des Containers zu den Töpfen (12) durchzulassen.

3. Vorrichtung (1) nach Anspruch 1 oder 2, **dadurch gekennzeichnet, dass** der Block (10) mit den Töpfen (12), das Versorgungsmodul
(101), das Zuführmodul (102), das Ableitungsmodul (103) für Abwasser(U), das Beleuchtungsmodul (104) und das Klimatisierungsmodul (105) dazu ausgelegt sind, in einen umgebauten isothermischen Seecontainer eingebettet zu werden, und **dadurch, dass** in einer Wand des Containers in Richtung der Schwerkraft (G) eine Glaswand angeordnet ist, wobei diese Glaswand dazu ausgelegt ist, natürliches Licht von außerhalb des Containers zu den Töpfen (12) durchzulassen.

4. Vorrichtung (1) nach Anspruch 1, **dadurch gekennzeichnet, dass** das Zuführmodul (102) für Reinwasser (P) umfasst:
• einen Tank (1021), der dazu ausgelegt ist, Wasser aus der umgebenden Atmosphäre außerhalb (13) des Blocks (10) zu sammeln,
• ein Abflussrohr (1022), das den Tank (1021) mit den in Schwerkraftrichtung (G) unteren Teilen der Töpfe (12) verbindet und dazu ausgelegt ist, die unteren Teile der Töpfe (12) mit Wasser aus dem Tank (1021) zu bewässern,
**dadurch, dass** das Abflussrohr (1022) für jeden abgedichteten Tunnel einen eigenen Schenkel umfasst, **dadurch, dass** jeder abgedichtete Tunnel ein Nährstoffmodul umfasst, das mit diesem Schenkel zusammenwirkt, und **dadurch, dass** das Nährstoffmodul dazu ausgelegt ist, bestimmte Nährstoffe an die Töpfe (12) des abgedichteten Tunnels abzugeben.

5. Vorrichtung (1) nach Anspruch 1 oder 4, **dadurch gekennzeichnet, dass** das Klimatisierungsmodul (105) dazu ausgelegt ist, in jedem abgedichteten Tunnel einen Luftüberdruck aufrechtzuerhalten, wobei der Luftüberdruck dazu ausgelegt ist, das Eindringen schädlicher Insekten von außerhalb des Blocks (10) in den abgedichteten Tunnel zu verhindern.

6. Vorrichtung (1) nach einem der Ansprüche 1 bis 5,
**dadurch gekennzeichnet, dass** der Block (10) Spuren von Hormonen umfasst, die dazu ausgelegt sind, im Inneren (11) des Blocks (10) eine natürliche Barriere gegen äußere schädliche Insekten zu bilden.

7. Vorrichtung (1) nach einem der Ansprüche 1 bis 6,
**dadurch gekennzeichnet, dass** das Zuführmodul (102) von Reinwasser(P) eine Reihe von Filtern umfasst, die dazu ausgelegt sind, das in den Block (10) eintretende Wasser (P) zu reinigen, ohne es zu sterilisieren.

8. Vorrichtung (1) nach einem der Ansprüche 1 bis 7,
**dadurch gekennzeichnet, dass** mindestens ein Topf (12) einen belüfteten Boden umfasst, der zur kontinuierlichen Sauerstoffversorgung der Wurzeln wachsender Pflanzen ausgelegt ist.

9. Vorrichtung (1) nach einem der Ansprüche 1 bis 8,
**dadurch gekennzeichnet, dass** es ferner umfasst:
• Sensoren (20), die im Inneren (11) des Blocks (10) angeordnet sind und dazu ausgelegt sind, eigene Daten zur kontrollierten Atmosphäre (T_{H}) im Inneren (11) des Blocks (10) zu sammeln;
• ein Verwaltungsmodul (106), das mit einer Mensch-Maschine-Schnittstelle (1060) ausgestattet ist und ausgelegt ist zum Zusammenwirken mit:
∘ diesen Sensoren (20),
∘ dem Versorgungsmodul (101) für elektrische Energie (E),
∘ dem Zuführmodul (102) für Reinwasser (P),
∘ dem Ableitungsmodul (103) für Abwasser (U),
∘ dem Beleuchtungsmodul (104),
∘ dem Klimatisierungsmodul (105).

10. Vorrichtung (1) nach einem der Ansprüche 1 bis 9,
**dadurch gekennzeichnet, dass** das Klimatisierungsmodul (105) umfasst:
• einen Luft-Boden-Erdwärmetauscher (S), der dazu ausgelegt ist, einen thermischen Zustand eines von außen (13) in den Block (10) eintretenden Luftstroms zu regulieren, und
• eine zentrale mechanische Doppelstromlüftung, die mit diesem Luft-Boden-Erdwärmetauscher (S) gekoppelt ist.

## Claims

1. Device (1) for producing plant-based foodstuffs using soilless cultivation, comprising:
• a thermally insulated unit (10) cooperating with:
∘ a power-supply module (101) for supplying the unit (10) with electrical energy (E),
∘ a supply module (102) for supplying the unit (10) with pure water (P),
∘ a discharge module (103) for removing wastewater (U) from the unit (10),
∘ a lighting module (104) cooperating with the power-supply module (101) for supplying electrical energy (E) and adapted to illuminate the interior (11) of the unit (10),
∘ a climate-control module (105) cooperating with the power-supply module (101) for supplying electrical energy (E) and adapted to produce and maintain a controlled atmosphere (T_{H}) in the interior (11) of the unit (10),
• pots (12) arranged in the controlled atmosphere (T_{H}) in the interior (11) of the unit (10), each of these pots (12) being illuminated by the lighting module (104) and adapted to:
∘ receive a plant organ,
∘ be irrigated with the pure water (P) supplied by the supply module (102) for supplying the unit (10) with pure water (P),
the unit (10) with the pots (12), the power-supply module (101), the supply module (102), the discharge module (103) for removing wastewater (U), the lighting module (104) and the climate-control module (105) being adapted to form a kit of built-in elements,
**characterized in that** the interior (11) of said unit (10) is divided into a plurality of isolated zones (15), (16), (17) from each other by thermally insulating partitions (18), **in that** the climate-control module (105) is adapted to produce and maintain a controlled atmosphere (T_{H}) specific to each isolated zone (15), (16), (17), **in that** the lighting module (104) is adapted to produce and maintain lighting specific to each isolated zone (15), (16), (17), **in that** the partitions (18) are transparent, **in that** at least one of the isolated zones (15) consists of a hermetic tunnel separate from the other isolated zones (16), **in that** this hermetic tunnel comprises a single shelf adapted to hold pots (12), and **in that** the lighting module (104) comprises light-emitting diodes arranged so as to be movable in the hermetic tunnel along the axis of gravity (G) above the shelf, each light-emitting diode being adapted to illuminate at least one pot (12).

2. The device (1) according to claim 1 , **characterized in that** the unit (10) with the pots (12), the power-supply module (101), the supply module (102), the discharge module (103) for removing wastewater (U), the lighting module (104) and the climate-control module (105) are adapted to be recessed into a converted isothermal shipping container, and **in that** a skylight is arranged in a ceiling of the container, perpendicular to gravity (G), said skylight being adapted to allow natural light to pass from outside the container to the pots (12).

3. The device (1) according to claim 1 or 2 , **characterized in that** the unit (10) with the pots (12), the power supply module (101), the supply module (102), the wastewater (U) evacuation module (103), the lighting module (104) and the climate-control module (105) are adapted to be built into a converted insulated shipping container, and **in that** a window is arranged in a wall of the container, along the line of gravity (G), this window being adapted to allow natural light from outside the container to reach the pots (12).

4. The device (1) according to claim 1, **characterized in that** the pure water (P) supply module (102) comprises:
• a tank (1021) adapted to collect water from the surrounding atmosphere outside (13) the unit (10),
• a drainage pipe (1022) connecting the tank (1021) to the lower parts, in the direction of gravity (G), of the pots (12) and adapted to irrigate the lower parts of the pots (12) with water from the tank (1021),
**in that** the drainage pipe (1022) has a branch specific to each hermetic tunnel, **in that** each hermetic tunnel has a nutrient module cooperating with this branch, and **in that** the nutrient module is adapted to deliver specific nutrients to the pots (12) of said hermetic tunnel.

5. The device (1) according to claim 1 or 4, **characterized in that** the climate-control module (105) is adapted to maintain positive an air pressure in each hermetic tunnel, said positive air pressure being adapted to prevent harmful insects from entering the hermetic tunnel from outside the unit (10).

6. The device (1) according to anyone of claims 1 to 5, **characterized in that** the unit (10) comprises traces of hormones adapted to form a natural barrier for external harmful insects in the interior (11) of the unit (10).

7. The device (1) according to anyone of claims 1 to 6, **characterized in that** the pure water (P) supply module (102) comprises a series of filters adapted to purify the water (P) entering the unit (10) without sterilizing it.

8. The device (1) according to anyone of claims 1 to 7, **characterized in that** at least one pot (12) has a ventilated base adapted to continuously oxygenate the roots of growing plants.

9. The device (1) according to anyone of claims 1 to 8, **characterized in that** it further comprises:
• sensors (20) disposed in the interior (11) of the unit (10) and adapted to collect data specific to the controlled atmosphere (T_{H}) in the interior (11) of the unit (10);
• a management module (106) equipped with a human-machine interface (1060) and adapted to cooperate with:
∘ these sensors (20),
∘ the electrical energy (E) power-supply module (101),
∘ the pure water (P) supply module (102),
∘ the discharge module (103) for removing wastewater (U),
∘ the lighting module (104),
∘ the climate-control module (105).

10. The device (1) according to anyone of claims 1 to 9, **characterized in that** the climate-control module (105) comprises:
• an air-ground geothermal exchanger (S) adapted to regulate a thermal state of an air flow entering the unit (10) from the outside (13), and
• a centralized dual-flow mechanical ventilation system coupled with said air-ground geothermal exchanger (S).
